(19) Europäisches Patentamt
European Patent Office
Office européen des brevets

(11) Veröffentlichungsnummer: **0 381 619**
**A1**

# (12) EUROPÄISCHE PATENTANMELDUNG

(21) Anmeldenummer: 90810050.6

(22) Anmeldetag: 23.01.90

(51) Int. Cl.5: **C08G 73/14, C08J 5/18, C08J 7/04, C09J 179/08, B32B 27/34**

(30) Priorität: 01.02.89 CH 376/89

(43) Veröffentlichungstag der Anmeldung: 08.08.90 Patentblatt 90/32

(84) Benannte Vertragsstaaten: BE CH DE FR GB IT LI NL SE

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**

## (54) Neue Polymere.

(57) Beschrieben werden neue lösliche Polyamid-Polyimid Blockcopolymere mit einem mittleren Molekulargewicht $M_n$ von 1'000-50'000, enthaltend in den Polyimidblöcken Reste der Formel

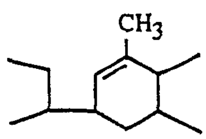

Die Verbindungen lassen sich durch Erhitzen zu unlöslichen Produkten vernetzen.

EP 0 381 619 A1

## Neue Polymere

Die vorliegende Erfindung betrifft neue Polyamid-Polyimid-Blockcopolymere (im folgenden PAPI Blockcopolymere genannt).

PAPI Blockcopolymere sind an sich bekannt und beispielsweise in der DE-A-2,342,464 beschrieben. Diese eignen sich wegen ihrer guten elektrischen, thermischen und/oder mechanischen Eigenschaften beispielsweise als Matrixharze für die Herstellung von Verbundwerkstoffen, als Beschichtungsharze in der Elektro- und Elektronik-Industrie, als flexible Laminierharze, als Klebfilme oder als Pressmassen. Uebliche PAPI Blockcopolymere sind in organischen Lösungsmitteln unlöslich oder nur wenig löslich, wie z.B. aus der US-A-4,503,285 bekannt ist. Daher muss zur Ausnützung der guten Eigenschaften der PAPI Blockcopolymeren im allgemeinen von der gut löslichen Vorstufe, den Polyamid-Polyamidsäure Blockcopolymeren ausgegangen werden. Diese Vorgehensweise ist in mancher Hinsicht nicht befriedigend. Zum einen sind die löslichen Vorprodukte in der Regel nur bedingt lagerstabil, da die durch Ringschluss entstehende Wassermenge zu einem Molekulargewichtsabbau und/oder der Ringschluss zu einem Ausfällen des Polymeren führt. Wird ausserdem die Imidisierung erst bei der Verarbeitung durchgeführt, so kann das entstehende Produkt infolge des austretenden Wassers Fehlstellen, wie Löcher und/oder Blasen aufweisen.

Es besteht daher der Wunsch nach löslichen PAPI Blockcopolymeren, die diese Nachteile nicht besitzen. Solche Polymeren sind bereits in der JP-A-62/30,121 und in der EP-A-260,709 beschrieben. Die vorbekannten Verbindungen sind durch die Verwendung vierkerniger aromatischer Diamineinheiten in den Polyamid- und den Polyimidblöcken oder durch die Anwesenheit von Polyamidimideinheiten in den Polyimidblöcken gekennzeichnet.

Solche löslichen PAPI Blockcopolymere besitzen Vorteile bei der Verarbeitung und können als Lösungen oder als Feststoffe nahezu unbegrenzt gelagert werden. In organischen Lösungsmitteln lösliche PAPI Blockcopolymere weisen andererseits den Nachteil auf, von solchen Lösungsmitteln angegriffen zu werden. Es ist also ein lösliches PAPI Blockcopolymer wünschenswert, das nach seiner Applikation aus der Lösung in einem nachfolgenden Schritt gegen einen Lösungsmittelangriff stabilisiert werden kann.

Es wurde jetzt gefunden, dass man dieses Ziel durch den Einbau von 5-(2,5-Diketotetrahydrofurfuryl)-3-methyl-3-cyclohexen-1,2-dicarbonsäureeinheiten (im folgenden DMCD genannt) in den Polyimidblock erreichen kann. Die Vernetzung der erfindungsgemässen Copolymeren verläuft in der Regel erstaunlich rasch.

DMCD ist aus der EP-A-9,645 bekannt. Diese Publikation beschreibt ferner die Herstellung von Polyimiden mit DMCD als Carbonsäurekomponente. Solche Polyimide sind im allgemeinen nicht thermisch vernetzbar. Es war daher überraschend zu finden, dass sich ausgewählte PAPI Blockcopolymere thermisch vernetzen lassen.

Ferner wurde gefunden, dass sich die erfindungsgemässen PAPI Blockcopolymeren bei hohen Temperaturen, bis etwa zur Glasübergangstemperatur, getrocknet werden können, was zu Vorteilen bei deren Herstellung und Reinigung führt. Ueberraschenderweise ist die Differenz zwischen maximal möglicher Trocknungstemperatur und minimal möglicher Härtungstemperatur gering, so dass sich anwendungstechnische Vorteile ergeben.

Die vorliegende Erfindung betrifft lösliche Polyamid-Polyimid Blockcopolymere mit einem mittleren Molekulargewicht $M_n$ von 1'000-50'000, insbesondere von 10'000-40'000, dadurch gekennzeichnet, dass diese ein Verhältnis von Amid- zu Imidgruppen von etwa 4:1 bis 1:4 aufweisen und dass diese Polymeren in den Polyimidblöcken einen Gehalt von mindestens 2 Mol.%, insbesondere von mindestens 5 Mol%, bezogen auf den Gehalt an allen Carbonsäureresten im Copolymeren, an Resten der Formel

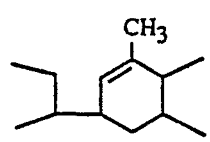

(DMCD Reste) aufweisen.

Der Gehalt an DMCD Resten in den erfindungsgemässen PAPI Blockcopolymeren beträgt in der Regel 2 bis 80 Mol%, bezogen auf den Gehalt an allen Carbonsäureresten im Copolymeren.

Bevorzugte PAPI Blockcopolymere enthalten Kombinationen von Blöcken der Formeln IIb mit Ia und/oder Ic oder der Formeln Ib mit IIa und/oder IIc

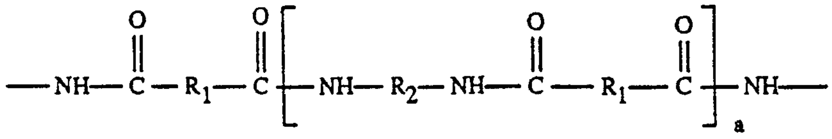 (Ia),

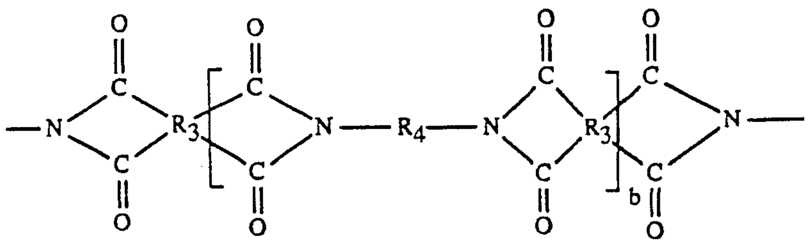 (Ib),

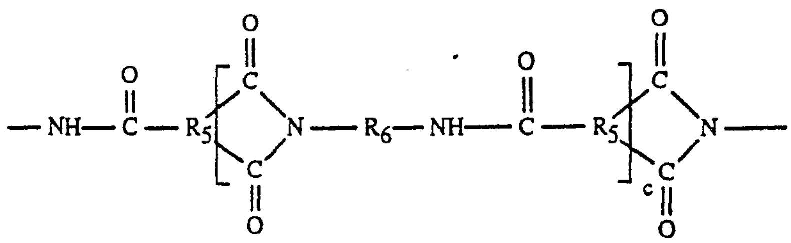 (Ic),

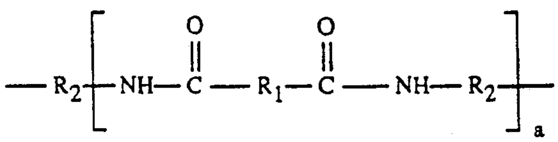 (IIa),

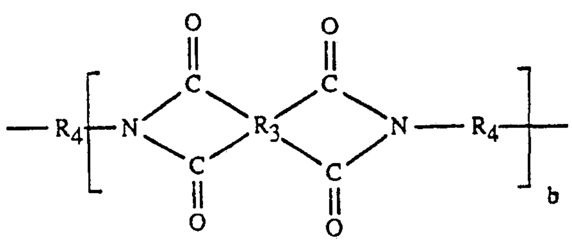 (IIb),

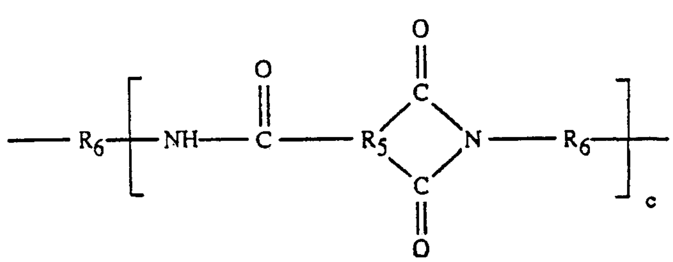 (IIc),

worin die Indizes a, b und c unabhängig voneinander ganze Zahlen von 1 bis 100 sind, $R_1$ ein Rest der Formeln $-C_nH_{2n}-$,

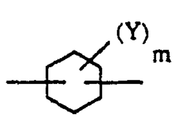 , 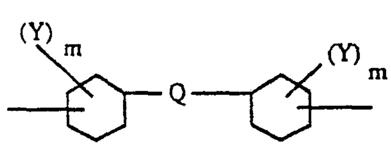 , 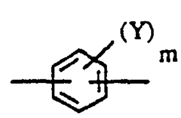 , 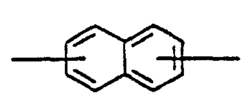

oder

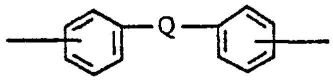

ist, n eine ganze Zahl von 2 bis 12 bedeutet, m eine ganze Zahl von 0 bis 4 ist, Y Alkyl oder Halogen ist, Q eine direkte Bindung darstellt oder $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln $-C_nH_{2n}-$,

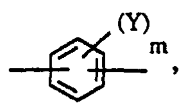 , 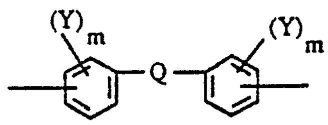

, 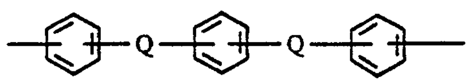 , 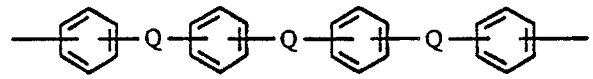 ,

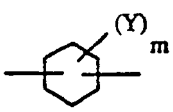 , 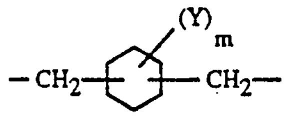 , 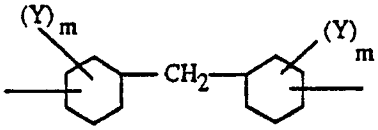 , 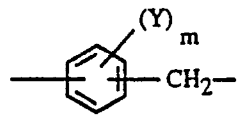

oder 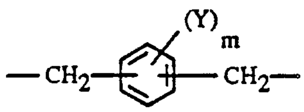 ist,

n, m, Y und Q eine der oben definierten Bedeutungen besitzen, $R_3$ ein Rest der Formeln

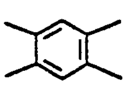 , 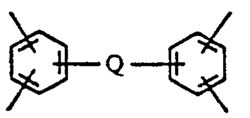 , 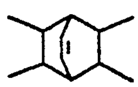 , 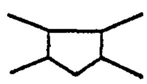 oder 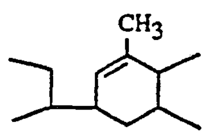 ist, Q

eine der oben angegebenen Bedeutungen besitzt, $R_5$ ein Rest der Formel

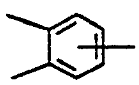 ist,

ist, und $R_4$ und $R_6$ unabhängig voneinander eine der für $R_2$ definierten Bedeutungen besitzen, mit der Massgabe, dass 25-100 Mol % aller Reste $R_3$ die Formel

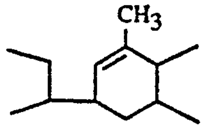

aufweisen.

Unter dem Begriff "lösliches PAPI Blockcopolymeres" ist im allgemeinen ein in dipolaren, aprotischen Lösungsmitteln lösliches Copolymer zu verstehen, aus dem sich Lösungen enthaltend mindestens 5 Gew.%, insbesondere mindestens 10 Gew.% an PAPI Blockcopolymer, bezogen auf die Lösung, herstellen lassen.

Das Verhältnis von Polyamidblöcken zu Polyimidblöcken und/oder Polyamidimidblöcken in den erfindungsgemässen Copolymeren wird im allgemeinen durch die gewünschte Löslichkeit dieses Copolymeren in dipolaren, aprotischen Lösungsmitteln und durch die Vernetzungsdichte im gewünschten Endprodukt

bestimmt. Die jeweiligen Anteile dieser Blöcke werden so gewählt, dass das Blockcopolymere in dipolaren, aprotischen Lösungsmitteln löslich ist und im vernetzten Zustand von diesen Lösungsmitteln praktisch nicht angegriffen wird.

Das bevorzugte Verhältnis von Amidgruppen zu Imidgruppen in den erfindungsgemässen Copolymeren beträgt 4:1 bis 1:4.

Die mittleren Molekulargewichte $M_n$ der Polyamidblöcke Ia und IIa oder der Polyimidblöcke Ib und IIb oder der Polyamidimidblöcke Ic und IIc betragen im allgemeinen 300 bis 20'000, insbesondere 500 bis 10'000.

Typische Vertreter der erfindungsgemässen PAPI Blockcopolymeren besitzen Glasumwandlungstemperaturen von bis zu 300 °C.

Neben den oben erwähnten Kombinationen von zwei Blöcken können die erfindungsgemässen PAPI Blockcopolymeren auch Dreiblockkombinationen der Formeln IIb und IIc und Ia oder Ic oder der Formeln Ia, Ib und Ic oder der Formeln Ia, Ic und IIb oder der Formeln Ib, Ic und IIa aufweisen.

Bevorzugte erfindungsgemässe PAPI Blockcopolymere bestehen im wesentlichen aus Kombinationen der Blöcke Ia und IIb oder der Blöcke Ib und IIa.

Der Index n ist vorzugsweise 6 bis 12 und der Index m ist bevorzugt 0 oder 1, insbesondere 0.

Ein Alkylsubstituent Y in den obenstehenden Formeln kann verzweigt oder bevorzugt geradkettig sein. Bevorzugt wird geradkettiges $C_1$-$C_6$Alkyl. Beispiele dafür sind Methyl, Ethyl, n-Propyl, n-Butyl, n-Pentyl und n-Hexyl. Besonders bevorzugt wird Methyl.

Y als Halogen ist vorzugsweise Chlor oder Brom.

In den obenstehenden Formeln bedeutet $R_1$ beispielsweise 1,3-Phenylen, 1,4-Phenylen, 2,4-Tolylen, 1,5-Naphthylen, 1,8-Naphthylen, 2,6-Naphthylen, 4,4′-Biphenylen,

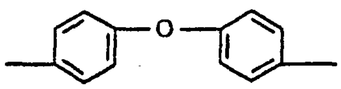 oder 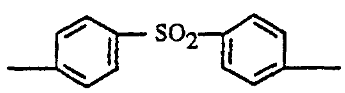 .

Bevorzugter Rest $R_1$ ist 1,3-Phenylen.

Bedeuten $R_1$, $R_2$, $R_4$ oder $R_6$ eine Gruppe $-C_nH_{2n}-$, so handelt es sich dabei beispielsweise um 1,2-Ethylen, 1,2-Propylen, 1,3-Propylen, 2,2-Propyliden, 1,4-Tetramethylen, 1,5-Pentamethylen, 1,6-Hexamethylen, 1,7-Heptamethylen, 1,8-Octamethylen, 1,9-Nonamethylen, 1,10-Decamethylen, 1,12-Dodecamethylen, 2,9-Decamethylen oder 2-Methyl-1,5-pentamethylen.

Sind $R_1$, $R_2$, $R_4$ oder $R_6$ eine Gruppe

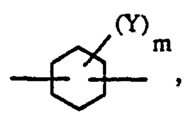 ,

so kann es sich dabei um 1,2-, 1,3-oder vorzugsweise um 1,4-Cyclohexylen handeln.

Weitere Beispiele für spezifische cycloaliphatische Gruppen $R_2$, $R_4$ oder $R_6$ sind

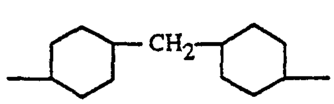 , 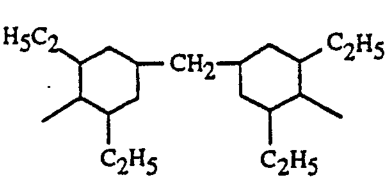 ,

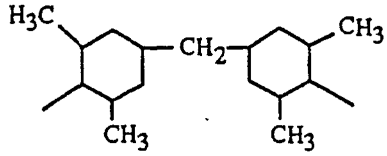 , 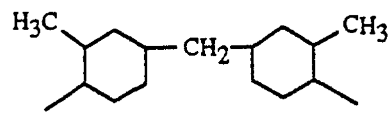 ,

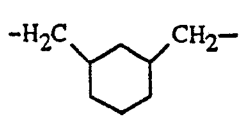 oder 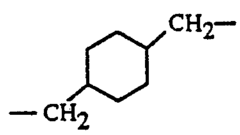 .

Beispiele für spezifische araliphatische Gruppen $R_2$, $R_4$ oder $R_6$ sind 2,5-Xylylen,

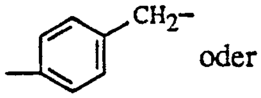 oder 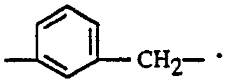 .

Beispiele für spezifische aromatische Gruppen $R_2$, $R_4$ oder $R_6$ sind 1,2-Phenylen, 1,3-Phenylen, 1,4-Phenylen, 2,4-Tolylen, 4-Chlor-1,3-phenylen, 2,5-Dichlor-1,4-phenylen oder eine der folgenden Gruppen

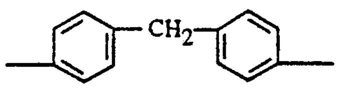 , 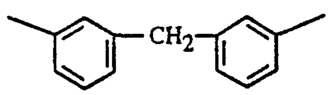 , 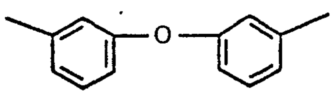 ,

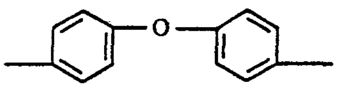 , 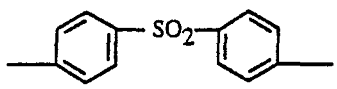 , 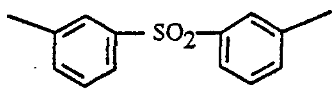 ,

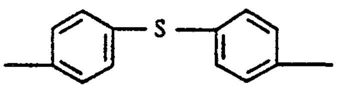 , 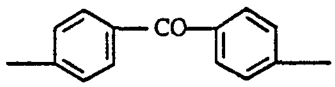 , 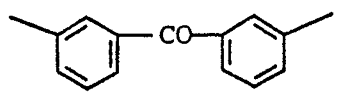 ,

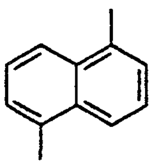 , 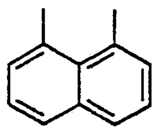 , 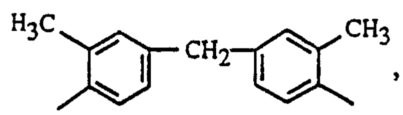 ,

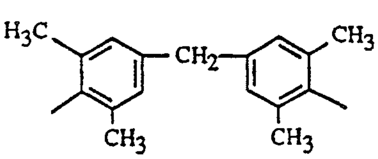 , 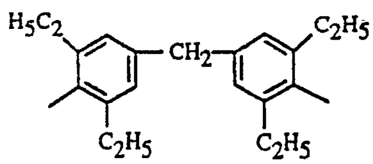 ,

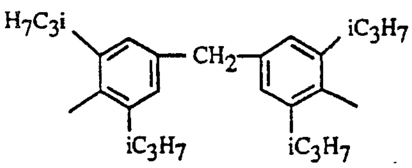 , 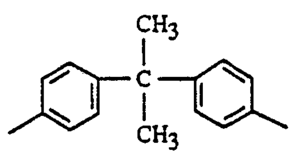 , 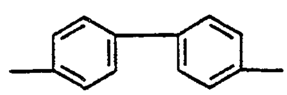

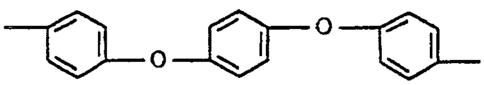 , 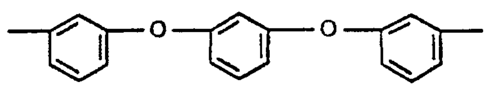 ,

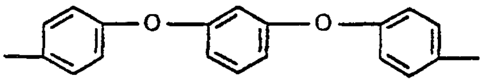 , 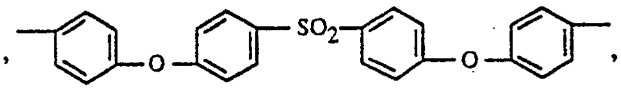 ,

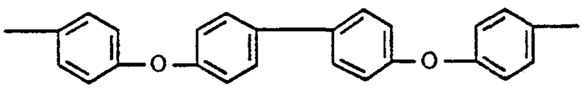 ,

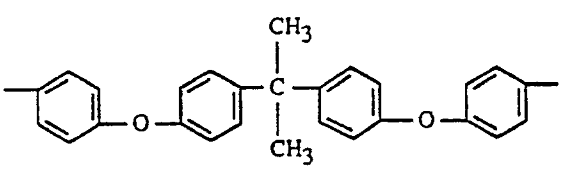 , 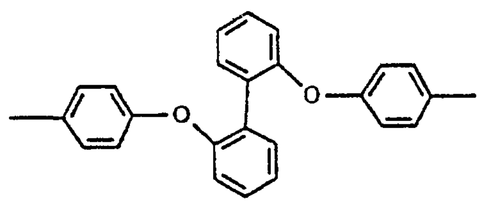 .

Bevorzugte Reste $R_2$ und/oder $R_4$ und/oder $R_6$ sind 1,3-Phenylen,

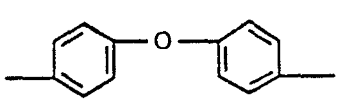 , 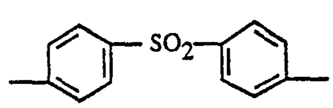 oder 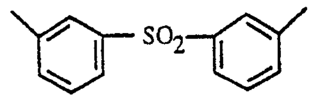 .

Es hat sich gezeigt, dass die Thermostabilität der erfindungsgemässen PAPI Blockcopolymeren besonders gut ist, wenn sie einen hohen Anteil an aromatischen Resten besitzen. Es sind daher PAPI Blockcopolymere bevorzugt, die neben den DMCD-Resten $R_3$ nur aromatische oder araliphatischen Reste aufweisen, etwa solche, wie sie oben beispielhaft für $R_1$, $R_2$, $R_4$, $R_5$ und $R_6$ aufgezählt sind.

Enthalten die Reste $R_1$, $R_2$, $R_3$, $R_4$ oder $R_6$ ein Brückenglied Q, so handelt es sich bevorzugt um $-CH_2-$, $-C(CH_3)_2-$, -O-, $-SO_2-$oder-CO-.

Enthält ein Rest $R_2$, $R_4$ oder $R_6$ mehrere Brückenglieder Q, so können diese gleich oder verschieden sein.

Der vierwertige Rest $R_3$ leitet sich von einer Tetracarbonsäure ab, die in der Lage ist, ein Dianhydrid zu bilden.

Dabei handelt es sich bevorzugt um Reste der Formeln und ganz besonders

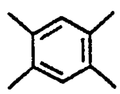 , 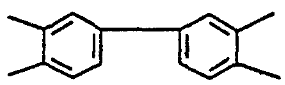 , 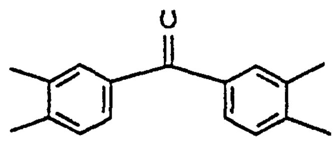

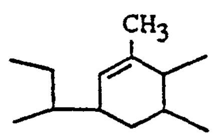 .

Der Anteil der DMCD Reste in den Polyimidblöcken der erfindungsgemässen Verbindungen beträgt vorzugsweise 50 bis 100 Mol %, bezogen auf den Anteil der Tetracarbonsäurereste in diesen Blöcken.

$R_5$ ist vorzugsweise ein Rest der Formel

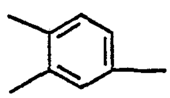 .

Die Herstellung der erfindungsgemässen Blockcopolymeren erfolgt auf an sich bekannte Weise, und kann beispielsweise nach einer der in der DE-A-2,342,464 beschriebenen Arbeitsweisen durch Umsetzung vorgeformter Polyamid- und Polyamidsäureblöcke und anschliessende Cyclisierung der Polyamid-Polyamidsäure erfolgen.

Eine weitere Herstellungsmethode umfasst die Umsetzung von Polyamidsäuren der Formel IIIa und/oder IIIb

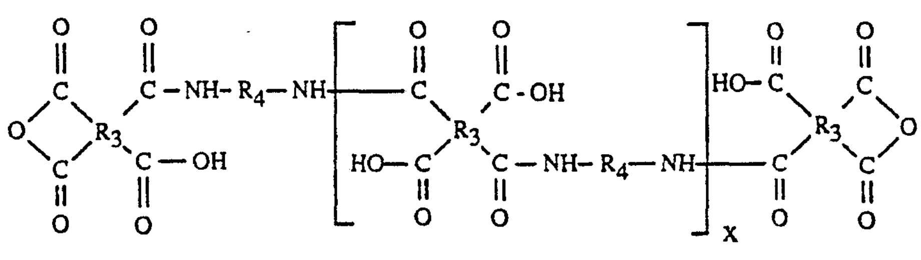 (IIIa)

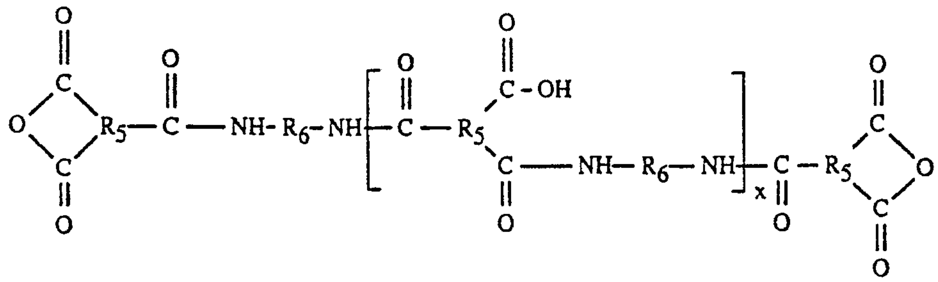 (IIIb)

mit Diaminen der Formel IV
$H_2N$-$R_2$-$NH_2$ (IV),
und mit Dicarbonsäurechloriden der Formel V
Cl-OC-$R_1$-CO-Cl (V)
und die anschliessende Cyclisierung der so erhaltenen Polyamid-Polyamidsäure Blockcopolymeren. In den Formeln IIIa, IIIb, IV und V haben die Symbole $R_1$, $R_2$, $R_3$, $R_4$, $R_5$ und $R_6$ die oben angegebene Bedeutung und x steht für eine ganze Zahl ≧ 0, bevorzugt für) ≧ 1.

Die Herstellung der Polyamidsäuren der Formeln IIIa bzw. IIIb ist ebenfalls an sich bekannt und erfolgt beispielsweise durch die Umsetzung von Tetracarbonsäureanhydriden der Formel VIa bzw. von Tricarbonsäureanhydriden VIb oder einem entsprechenden Tricarbonsäureanhydridchlorid

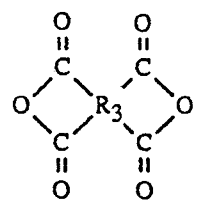 (VIa), 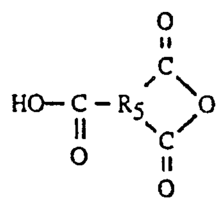 (VIb)

worin $R_3$ und $R_5$ die oben angegebene Bedeutung haben, mit einem Unterschuss eines Diamins der Formel IV.

Die Ausgangsprodukte der Formeln IV, V, VIa und VIb sind an sich bekannt und teilweise im Handel erhältlich.

Die Herstellung von DMCD-Dianhydrid

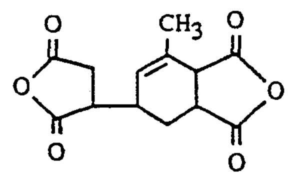

ist aus der EP-A-9,645 bekannt und kann durch Umsetzung von 3-Methyl-4-cyclohexen- 1,2-dicarbonsäureanhydrid mit Maleinsäureanhydrid erfolgen.

Durch Wahl der geeigneten Reaktionsbedingungen, wie z.B. durch geeignete Wahl der Molverhältnisse der Reaktionspartner, lassen sich die gewünschten mittleren Molekulargewichte der einzelnen Blöcke einstellen. Diese Auswahl ist dem Fachmann an sich bekannt.

Die Polykondensation der Di-, Tri- oder Tetracarbonsäurederivate der Formeln IIIa, IIIb, V, VIa oder VIb mit den Diaminen der Formel IV kann auf an sich bekannte Weise vorgenommen werden, vorzugsweise in einem wasserfreien organischen Lösungsmittel und unter Feuchtigkeitsausschluss, z.B. unter Stickstoff bei Temperaturen zwischen -20 °C und +50 °C, insbesondere etwa -15 °C bis + 10 °C.

Geeignete organische Lösungsmittel sind beispielsweise N,N-Dimethylacetamid, N,N-Diethylacetamid, N,N-Dimethylformamid, N-Methyl-2-pyrrolidon (NMP), N-Acetyl-2-pyrrolidon, N-Methyl-ε-caprolactam, N,N,N′,N′-Tetramethylharnstoff, Tetrahydrothiophendioxid (Sulfolan) und Dimethylsulfoxid.

Die Reaktion kann auch in Gemischen solcher Lösungsmittel durchgeführt werden. Andererseits ist es auch möglich, diese bevorzugten Lösungsmittelsysteme mit anderen organischen aprotischen Lösungsmitteln, wie aromatischen, cycloaliphatischen oder aliphatischen, gegebenenfalls chlorierten Kohlenwasserstoffen, beispielsweise Toluol, Xylolen, Cyclohexan, Pentan, Hexan, Petrolether, Dichlormethan, Tetrahydrofuran, Cyclohexanon und Dioxan, zu verdünnen.

Die Polyamidblöcke können auch mittels Grenzflächen-Polykondensation hergestellt werden.

Nach Beendigung der Umsetzung lassen sich die Lösungsmittel gewünschtenfalls auf übliche Weise entfernen, beispielsweise durch Abdestillieren, gegebenenfalls unter vermindertem Druck. Die Polyamid-Polyamidsäure Blockcopolymeren können, falls gewünscht, nach an sich bekannten Methoden durch Eingiessen der Reaktionslösung in ein Fällungsmittel, wie Wasser oder aliphatische Kohlenwasserstoffe, z.B. in Petrolether, besonders jedoch in Methanol, Isopropanol, Aceton, beidseitige Ether des Mono-, Di- oder Triethylenglykols oder Acetonitril, ausgefällt und gegebenenfalls getrocknet werden.

Die Cyclisierung der Polyamid-Polyamidsäure Blockcopolymeren zu den entsprechenden PAPI Blockcopolymeren erfolgt, indem man die Polyamid-Polyamidsäure Blockcopolymeren vorzugsweise ohne vorherige Isolation, d.h. direkt in der oben beschriebenen Reaktionslösung auf Temperaturen zwischen 50 und 300 °C erhitzt oder mit einem Dehydratisierungsmittel allein oder im Gemisch mit einem tertiären Amin behandelt. In Frage kommen z.B. Essigsäureanhydrid oder Propionsäureanhydrid oder ein Gemisch aus Essigsäureanhydrid und Triethylamin oder Pyridin. Verfahren diser Art sind beispielsweise in der US-A-3,894,114, der US-A-4,124,651 oder der US-A-4,503,285 beschrieben.

Die erfindungsgemässen Verbindungen können auch hergestellt werden, indem in an sich bekannter Weise zuerst ein Polyamidblock oder Polyamidimidblock aufgebaut wird und anschliessend durch Umsetzung mit Tetracarbonsäureanhydrid und Diamin das Polyamid-Polyamidsäure Blockcopolymere hergestellt wird, das anschliessend cyclisiert wird.

Die erfindungsgemässen PAPI Blockcopolymeren besitzen eine für die eingangs erwähnte Problemstellung gute Löslichkeit in aprotischen, dipolaren Lösungsmitteln. Sehr gute Löslichkeiten können beispielsweise in N,N-Dimethylacetamid, N,N-Dimethylformamid, N,N-Dimethylacetamid, N-Methyl-2-pyrrolidon, Sulfolan, Dimethylsulfoxid oder γ-Butyrolacton gegebenenfalls unter Erwärmen erzielt werden.

Es ist zu erwähnen, dass im allgemeinen eine hohe Konzentration der polymeren Verbindungen erwünscht ist. Die so hergestellten Lösungen sind im Gegensatz zur Polyamid-Polyamidsäurevorstufe lagerstabil. Das gleiche gilt natürlich auch für den Feststoff selbst.

Auf diese Weise gelingt die Herstellung von Lösungen, welche im wesentlichen frei von Nebenprodukten und Monomerresten sind. Die Verarbeitung erfolgt äusserst einfach, da kein Cyclisierungsschritt zu durchlaufen ist und damit keine Wasserabspaltung erfolgt, welche zu unerwünschten Effekten und Schädigung des Endprodukts führt. Bei der Anwendung der erfindungsgemässen PAPI Blockcopolymeren muss lediglich das Lösungsmittel entfernt werden und es gelingt die Herstellung von Produkten hoher Qualität und hoher thermischer Stabilität mit der Möglichkeit zu hohen Gebrauchstemperaturen.

In einem Folgeschritt oder gleichzeitig mit dem Entfernen des Lösungsmittels lassen sich die erfindungsgemässen Copolymeren durch Erhitzen vernetzen. Die Temperaturen für den Vernetzungsschritt sind im allgemeinen, je nach verwendetem Copolymeren, unter schiedlich. In der Regel erhitzt man die Copolymeren oberhalb ihrer Glasumwandlungstemperatur ($T_g$ Wert) oder, im Falle von mehreren $T_g$ Werten, oberhalb ihres niedrigsten, insbesondere oberhalb ihres höchsten $T_g$ Wertes. $T_g$ Werte lassen sich beispielsweise durch Differential Scanning Calorimetry (DSC) bestimmen, wobei hier der "onset Wert" [=Schnittpunkt der verlängerten Basislinie mit der Tangente an die Messkurve im Bereich des steilsten Anstiegs] Verwendung findet. Der Begriff "Glasumwandlungstemperatur" bezieht sich auf die Werte des Polymeren in der jeweiligen Formulierung. Dabei kann es sich um Werte handeln, die auch unterhalb der Werte für das reine Polymere liegen. So können beispielsweise lösungsmittel- und/oder weichmacherhaltige Polymere $T_g$ Werte aufweisen, die unterhalb der Werte für das reine Polymere liegen. In der Regel erfolgt die Vernetzung bei Temperaturen zwischen 250 und 350 °C.

Die Erfindung betrifft also auch ein Verfahren zur Herstellung von vernetzten PAPI Blockcopolymeren, dadurch gekennzeichnet, dass man PAPI Blockcopolymere enthaltend DMCD Reste in den Polyimidblöcken auf Temperaturen oberhalb ihres Glasumwandlungspunktes erhitzt.

Ferner betrifft die Erfindung die durch dieses Verfahren erhältlichen vernetzten Produkte.

Mit dem erfindungsgemässen Verfahren lassen sich auf vorteilhafte Weise Beschichtungen mit grossen Schichtdicken oder auch Formkörper herstellen, da die thermische Härtung innerhalb des gesamten vernetzbaren Materials gleichmässig erfolgt.

Die definitonsgemässen Blockcopolymeren zeichnen sich durch eine gute Verarbeitbarkeit aus und können zur Herstellung von industriellen Erzeugnissen, wie Fasern, faserverstärkten Verbundwerkstoffen, Schichtkörpern, Giesskörpern, Laminaten, Matrixharzen, Honeycomb-Core Materialien, Lacken, Klebstoffen, Schaumstoffen, Ueberzugsmassen, Filmen (Folien), Press- und Sinterpulvern und Presskörpern verwendet werden.

Insbesondere lassen sich die erfindungsgemässen Blockcopolymeren zur Herstellung von Beschichtungen, Folien und flexiblen Laminaten oder als Klebstoffe, Matrixharze oder Pressmassen verwenden.

Dazu können den Blockcopolymeren vor dem Vernetzungsschritt übliche Zusatzstoffe zugegeben werden, wie Pigmente, Füllstoffe, elektrische Leiter, wie beispielsweise Russ oder Metallpartikel, Mittel zur Erhöhung der Abriebfestigkeit, Schmiermittel oder verstärkende Fasern, wie Kohlenstoff-, Bor- oder Glasfasern.

Schichtkörper, welche die erfindungsgemässen Blockcopolymeren enthalten, können gegebenenfalls mit die Oberflächeneigenschaften verbessernden Ueberzugsschichten, z.B. aus Phenolharzen, Aluminium, versehen werden und finden unter anderem im Flugzeugbau Verwendung.

Erfindungsgemässe Blockcopolymere, vorzugsweise in Form von Lösungen, können auch als Ueberzugsmassen und Klebstoffe gegebenenfalls unter Zusatz von Pigmenten, wie Titandioxid, üblichen Füll- und Schaumstoffen, zum Beschichten und Ueberziehen von Substraten der verschiedensten Art in beliebiger Form, wie Folien, Fasern, Faservliesen, Drähten, gitterförmigen Strukturen, Geweben, Schaumstoffen, verwendet werden.

Als geeignete Substrate seinen erwähnt: Metalle oder Legierungen, wie Kupfer, Messing, Aluminium, Eisen oder Stahl; Asbest- oder Glasfasermaterialien; Polymere, wie Cellulosematerialien (Celluloseester oder -ether, Papier); Perfluorkohlenstoffpolymere, z.B. Polytetrafluorethylen, Polyolefine, Polyester, Polyamide, Polyimide oder Polyurethane.

Die folgenden Beispiele erläutern die Erfindung.

Synthesebeispiel 1:

Polyamidsäureblock: In einem Doppelmantelreaktionsgefäss mit Schutzgasanschluss, Innenthermometer, Tropftrichter und Rührer werden unter Stickstoff 70,71 g (0,2676 Mol) 5-(2,5-Dioxotetrahydrofurfuryl)-3-methyl-3-cyclohexen-1,2-dicarbonsäureanhydrid (Epiclon B 4400 der Fa. Dalnippon Ink) und 244 g N-Methylpyrrolidon (NMP) eingewogen. Das Reaktionsgefäss wird dreimal evakuiert und mit Stickstoff begast. Die klare Lösung wird auf -15°C abgekühlt. Über den Tropftrichter wird bei -15°C im Verlauf von 70 Minuten eine Lösung von 45,95 g (0,2295 Mol) 4,4′-Diaminodiphenylether in 347 g NMP zugegeben. Danach lässt man die Reaktionsmischung auf Raumtemperatur kommen und rührt 2 Stunden nach.

Polyamid-Polyamidsäure-Blockcopolymeres: Die klare Reaktionsmischung wird erneut abgekühlt (-10°C). Über den Tropftrichter werden sodann 53,85 g (0,4980 Mol) m-Phenylendiamin in 361 g NMP im Verlauf von 75 Minuten zugetropft. Im folgenden werden 93,13 g (0,4582 Mol) Isophthalsäuredichlorid portionsweise zugegeben, so dass die Innentemperatur 0°C nicht übersteigt. Man benötigt etwa 75 Minuten, wobei die Lösung in zunehmendem Masse viskos wird. Schliesslich wird die Polymerlösung bei Raumtemperatur 30 Minuten gerührt. Man setzt weitere 1,27 g (0,0063 Mol) Isophthalsäuredichlorid zu und rührt 1 Stunde zur Vervollständigung der Polykondensation. Danach gibt man über einen Tropftrichter im Verlauf von 30 Minuten 71,10 g (0,986 Mol) Butylenoxid zu (Innentemperatur 22°C). Man erhält auf diese Weise eine Lösung eines Polyamid-Polyamidsäure-Blockcopolymeres mit einer inhärenten Viskosität von 1,01 dl/g (0,5 Gew.-% an Feststoff in NMP/25°C).

Cyclisierung: Die nun vorliegende Polyamid-Polyamidsäure Blockcopolymeren-Lösung wird nun der chemischen Cyclisierung zum Polyamid-Polyimid-Blockcopolymeren unterzogen. Dazu erfolgt über einen Tropftrichter die Zugabe eines Gemisches aus 121,43 g (1,20 Mol) Triethylamin und 145,80 g (1,2480 Mol) Acetanhydrid innerhalb von 20 Minuten bei 25°C. Man lässt nun weitere 8 Stunden bei Raumtemperatur rühren. Die inhärente Viskosität (0,5% Feststoff, NMP; 25°C) eines so hergestellten Polyamid-Polyimid-Blockcopolymeren beträgt 0,81 dl/g.

Ein Teil der oben beschriebenen Lösung wird mit der gleichen Menge NMP verdünnt, in der 10fachen Menge Isopropanol ausgefällt und im Trockenschrank unter Vakuum getrocknet. Die Temperatur wird dabei innerhalb von 72 Stunden stufenweise auf 240°C erhöht und bei dieser Temperatur 8 Stunden belassen. Das Polymere ist nach diesem Trockenprozess zu mehr als 30% in NMP löslich. Die inhärente Viskosität (0,5%, NMP, 25°C) des Polymeren beträgt 0,67 dl/g.

Beschichtung: Eine Lösung des oben beschriebenen Polyamid-Polyimid-Blockcopolymeren mit 25-Gew.-% in NMP wird mittels einer Lackhantel (Höhe 200 µm) auf eine Kupferfolie aufgetragen. Die Hauptmenge des Lösungsmittels wird durch eine 15 minütige IR-Bestrahlung entfernt. Die Polymerschicht eines so hergestellten Probestreifens lässt sich durch 30minütiges Eintauchen in NMP vollständig ablösen. Ein weiterer Probestreifen wird zusätzlich im Vakuum (15 mbar) innerhalb von 30 Minuten von Raumtemperatur auf 300°C und bei dieser Temperatur weitere 30 Minuten erwärmt. Man erhält eine blasenfrei beschichtete, flexible Cu-Folie. Die so behandelte Folie wird gewogen, 30 Minuten in NMP getaucht und erneut gewogen. Dabei zeigt sich ein unverändertes Gewicht, d.h. die Beschichtung wird nicht mehr von NMP angegriffen. Ebenso ist die Oberfläche der Beschichtung vor und nach der NMP-Behandlung

unverändert.

Synthesebeispiele 2-5:

Man arbeitet wie unter Beispiel 1 beschrieben und setzt die in der folgenden Tabelle aufgeführten Ausgangsmaterialien miteinander um. Man erhält lösliche Polyamid-Polyimid-Blockcopolymere. Deren Eigenschaften sind in der folgenden Tabelle beschrieben.

Tabelle

| Polyamid-Polyimid-Blockcopolymere, die analog Beispiel 1 hergestellt wurden | | | | | | | | | |
|---|---|---|---|---|---|---|---|---|---|
| Nr. | PI - Block | | PA - Block | | $\eta$ inh [dl/g] | | $T_g$ [°C] | Löslichkeit in NMP [%] nach Trockentemp. von 240° C | Gewichtsverlust [%] Beschichtung nach 30 Min/300° C und 30 Min NMP/20°C |
| | Tetracarbonsäure dianhydrid (Mol) | Diamin (Mol) | Dicarbonsäuredichlorid (Mol) | Diamin (Mol) | PAPAS | PAPI | | | |
| 1 (Mol) | DMCD (0,2676) | DDE (0,2295) | IPC (0,4645) | mPDA (0,4980) | 1,01 | 0,67 | 278 | > 30 | < 0,2 |
| 2 (Mol) | DMCD (0,2500) | mDDS (0,1042) pDDS (0,1042) | IPC (0,3775) | mDDS (0,2084) pDDS (0,2084) | 0,46 | 0,40 | 277 | > 30 | 1 |
| 3 (Mol) | DMCD (0,2404) | Diamingemisch (0,2004) | IPC (0,3657) | Diamingemisch (0,4037) | 0,59 | 0,52 | 215 | > 30* | < 0,2 |
| 4 (Mol) | DMCD (0,1052) BTDA (0,1052) | mXDA (0,091) pDDS (0,0917) | IPC (0,3657) | mPDA (0,3926) | 0,63 | 0,35 | 265 | > 30 | < 0,2 |
| 5 (Mol) | DMCD (0,1250) | DDE (0,1042) | IPC (0,1877) | DDE (0,2084) | 1,66 | 1,06 | 265 | >30 | <0,2 |

* Trockentemperatur 200° C

DMCD: 5-(2,5-Dioxotetrahydrofurfuryl)-3-methyl-3-cyclohexen-1,2-dicarbonsäureanhydrid

BTDA: 3,3′,4,4′-Benzophenontetracarbonsäuredianhydrid

IPC: Isophthalsäuredichlorid DDE: 4,4′-Diaminodiphenylether

pDDS: 4,4′-Diaminodiphenylsulfon mDDS: 3,3′-Diaminodiphenylsulfon

mPDA: m-Phenylendiamin mXDA: m-Xylylendiamin

Diamingemisch: technisches Produkt bestehend aus 4,4′-Diaminodiphenylmethan, 3-Ethyl-4,4′-Diaminodiphenylmethan, 3,3′-Diethyl-4,4′-Diaminodiphenylmethan (M = 232)

Inhärente Viskosität: 0,5 Gew.-% Polymeres in NMP bei 25° C

$T_g$ Glasumwandlungstemperatur bestimmt durch DSC; Aufheizrate: 20°C/Minute

Beispiel 6:

Mit diesem Beispiel werden die guten mechanischen Eigenschaften eines mit einem erfindungsgemässen PAPI-Blockcopolymeren hergestellten flexiblen Laminates gezeigt.

Mittels einer Lackhantel (200 µm) beschichtet man eine Kupferfolie mit einer 25 %igen Lösung des Blockcopolymeren gemäss Synthesebeispiel 5 in N-Methylpyrrolidon. Die Beschichtung wird mit IR-Strahlung (Heraeus Modell MBS 225/125)45 Minuten lang getrocknet. Die beschichtete Folie wird sodann in 1 cm lange Streifen zerschnitten und das "Flex-Life" des Laminates bestimmt [= Zahl der Faltungen bis zum Bruch des Laminates mittels Universal-Model 2 FDF Flex Ductility Tester (Hersteller: Universal Manufacturing Co.) mit Zuggewicht 224 g und 2 mm Dorn ermittelt]. Dabei ergibt sich für 5 Prüfstreifen ein Mittelwert von 294 Cyclen.

## Ansprüche

1. Lösliche Polyamid-Polyimid Blockcopolymere mit einem mittleren Molekulargewicht $M_n$ von 1'000-50'000, dadurch gekennzeichnet, dass diese ein Verhältnis von Amid- zu Imidgruppen von etwa 4:1 bis 1:4 aufweisen und dass diese Polymeren in den Polyimidblöcken einen Gehalt von mindestens 2 Mol.%, bezogen auf den Gehalt an allen Carbonsäureresten im Copolymeren, an Resten der Formel

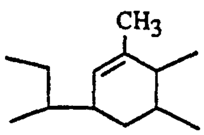

aufweisen.

2. Blockcopolymere gemäss Anspruch 1 enthaltend Kombinationen von Blöcken der Formeln IIb mit Ia oder Ic oder der Formeln Ib mit IIa und/oder IIc

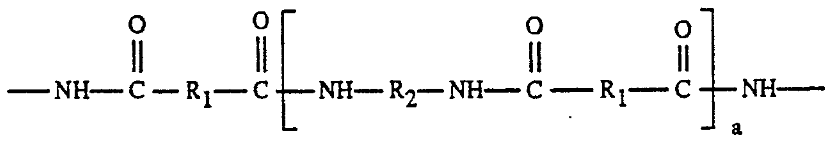 (Ia),

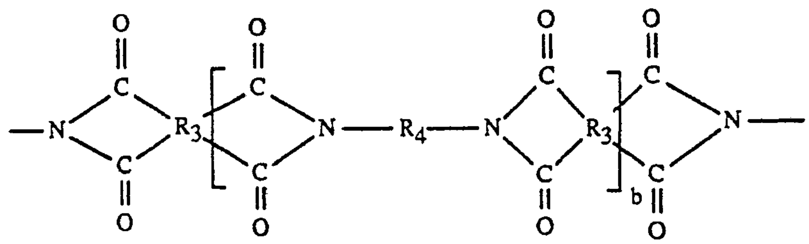 (Ib),

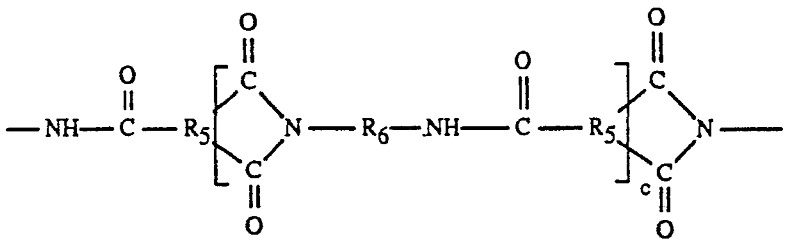 (Ic),

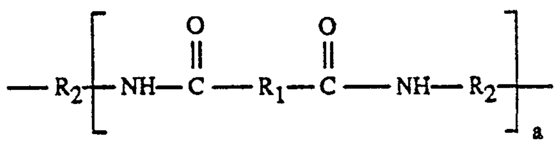 (IIa),

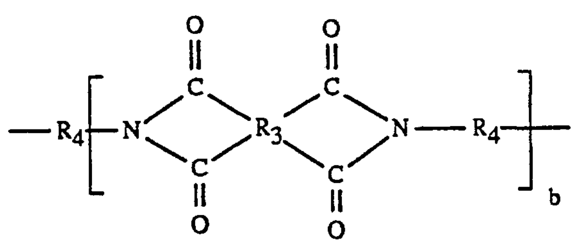 (IIb),

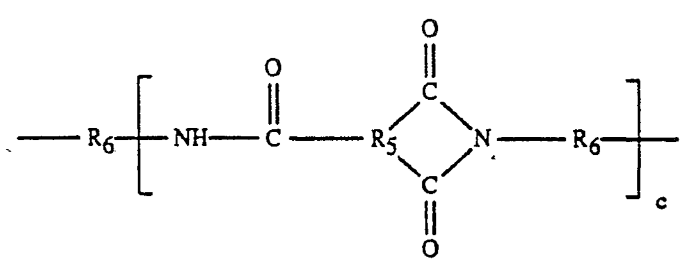 (IIc),

worin die Indizes a, b und c unabhängig voneinander ganze Zahlen von 1 bis 100 sind, $R_1$ ein Rest der Formeln $-C_nH_{2n}-$,

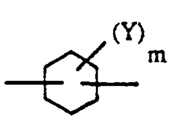 , 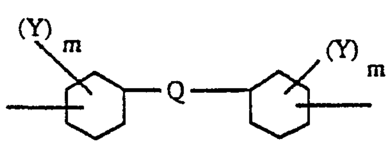 , 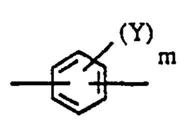 , 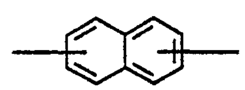

oder

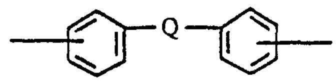

ist, n eine ganze Zahl von 2 bis 12 bedeutet, m eine ganze Zahl von 0 bis 4 ist, Y Alkyl oder Halogen ist, Q eine direkte Bindung darstellt oder $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln$-C_nH_{2n}-$,

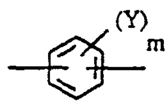 , 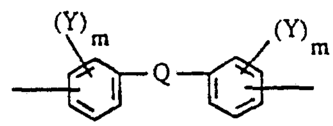

, 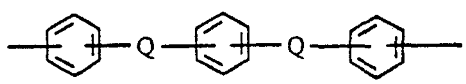 , 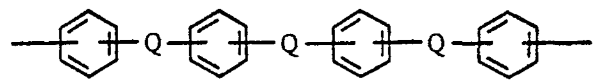 ,

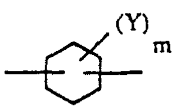 , 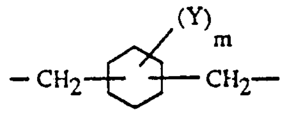 , 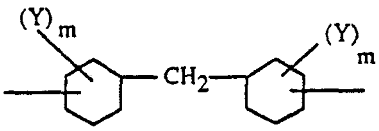 , 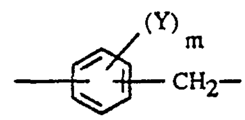

oder

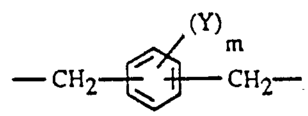

ist n, m, Y und Q eine der oben definierten Bedeutungen besitzen, $R_3$ ein Rest der Formeln

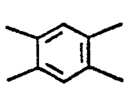 , 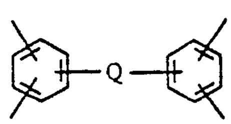 , 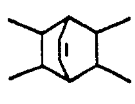 , 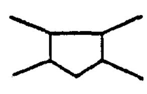 oder 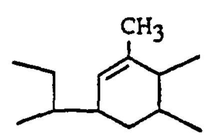 ist, Q

ist, Q eine der oben angegebenen Bedeutungen besitzt, $R_5$ ein Rest der Formel

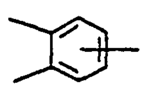 ist,

ist, und $R_4$ und $R_6$ unabhängig voneinander eine der für $R_2$ definierten Bedeutungen besitzen, mit der Massgabe, dass 25-100 Mol % aller Reste $R_3$ die Formel

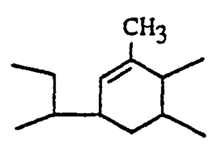 ;

aufweisen.

3. Blockcopolymere gemäss Anspruch 2, dadurch gekennzeichnet, dass diese im wesentlichen aus Kombinationen der Blöcke Ia und IIb oder der Blöcke Ib und IIa bestehen.

4. Blockcopolymere gemäss Anspruch 2, dadurch gekennzeichnet, dass der Index n 6 bis 12 ist und der Index m 1 oder insbesondere 0 ist.

5. Blockcopolymere gemäss Anspruch 2, dadurch gekennzeichnet, dass $R_1$ 1,3-Phenylen ist.

6. Blockcopolymere gemäss Anspruch 2, dadurch gekennzeichnet, dass $R_2$ und/oder $R_4$ und/oder $R_6$ 1,3-Phenylen,

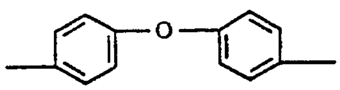 , 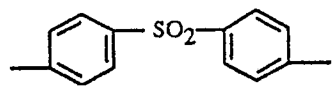

oder

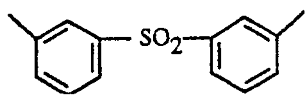

sind.

7. Blockcopolymere gemäss Anspruch 2, dadurch gekennzeichnet, dass Q $-CH_2-$, $-C(CH_3)_2-$, -O-, $-SO_2-$ oder -CO- ist.

8. Blockcopolymere gemäss Anspruch 2, dadurch gekennzeichnet, dass $R_3$ ein Rest der Formeln

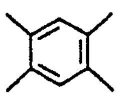 , 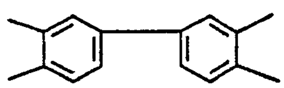 , 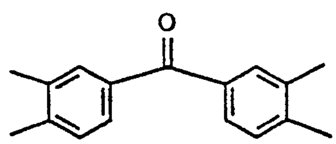 .

und ganz besonders

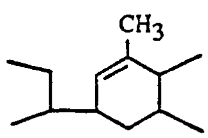

ist.

9. Blockcopolymere gemäss Anspruch 2, dadurch gekennzeichnet, dass der Anteil der Reste $R_3$ der Formel

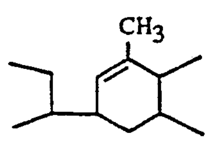

in den Polyimidblöcken 50 bis 100 Mol %, bezogen auf den Anteil der Tetracarbonsäurereste in diesen Blöcken, beträgt.

10. Verfahren zur Herstellung von vernetzten Polyamid-Polyimid Blockcopolymeren, dadurch gekennzeichnet, dass man PAPI Blockcopolymere enthaltend Reste der Formel

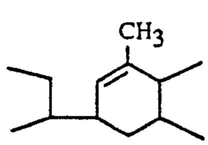

in den Polyimidblöcken auf Temperaturen oberhalb ihres Glasumwandlungspunktes erhitzt.

11. Verwendung von Polyamid-Polyimid Blockcopolymeren gemäss Anspruch 1 zur Herstellung von Beschichtungen, Folien und flexiblen Laminaten oder als Klebstoffe, Matrixharze oder Pressmassen.

Europäisches Patentamt

# EUROPÄISCHER RECHERCHENBERICHT

Nummer der Anmeldung

EP 90810050.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | EP - A1 - 0 009 645 (DAINIPPON INK AND CHEMICALS, INC.) * Ansprüche * -- | 1,2,8, 11 | C 08 G 73/14<br>C 08 J 5/18<br>C 08 J 7/04<br>C 09 J 179/08<br>B 32 B 27/34 |
| D,A | US - A - 4 503 285 (DARMS et al.) * Ansprüche * -- | 1-3,5, 6,8,11 | |
| D,A | EP - A1 - 0 260 709 (CHEMIE LINZ AKTIENGESELL-SCHAFT) * Ansprüche * ---- | 1,2 | |

RECHERCHIERTE SACHGEBIETE (Int Cl 5)

C 08 G 73/00
C 08 J
C 09 J 179/00
B 32 B
C 07 D 307/00
H 05 K

Der vorliegende Recherchenbericht wurde für alle Patentansprüche erstellt.

| Recherchenort | Abschlußdatum der Recherche | Prüfer |
|---|---|---|
| WIEN | 02-05-1990 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument